# EUROPEAN PATENT SPECIFICATION

(11) **EP 2 814 781 B1**
(45) Date of publication and mention of the grant of the patent: **15.01.2020**
(21) Application number: 13704793.2
(22) Date of filing: 18.02.2013
(51) Int. Cl.: C02F 9/00, C02F 1/00, C02F 1/28, C02F 1/32, C02F 1/78

(54) **A METHOD AND APPARATUS FOR SANITISING A TREATED WATER SUPPLY OF UNSATISFACTORY QUALITY TO PRODUCE A POTABLE WATER SUPPLY OF SATISFACTORY QUALITY**
VERFAHREN UND VORRICHTUNG ZUM ENTKEIMEN EINER BEHANDELTEN WASSERVERSORGUNG VON UNZUREICHENDER QUALITÄT ZUR HERSTELLUNG EINER TRINKWASSERVERSORGUNG VON ZUFRIEDENSTELLENDER QUALITÄT
PROCÉDÉ ET APPAREIL POUR ASEPTISER UNE ALIMENTATION D'EAU TRAITÉE DE QUALITÉ INSATISFAISANTE POUR PRODUIRE UNE ALIMENTATION D'EAU POTABLE DE QUALITÉ SATISFAISANTE

(30) Priority: 16.02.2012 IE S20120080
(43) Date of publication of application: 24.12.2014
(73) Proprietor: Ozone Industries Ireland Limited, Dublin 2 (IE)
(72) Inventor: LEONARD, Owen, Newtownmountkennedy County Wicklow (IE)
(74) Representative: Schütte, Gearoid
(86) International application number: PCT/EP2013/053213
(87) International publication number: WO 2013/121050

(56) References cited:
- US-A1- 2005 139 530
- US-A1- 2006 275 431
- US-B1- 6 814 876

## Description

### Introduction

This invention relates to a method and apparatus for sanitising an unsatisfactory water supply to produce a satisfactory water supply.

Throughout this specification, the term "water supply" shall be understood to encompass any type of treated water supply, such as a municipal water supply, a partially treated water supply, or a local supply such as a private well. The term will also be understood to refer to lake water and other such fresh water supplies, but the term will be interpreted to exclude rainwater.

It has been found that even where a municipal water supply has already been treated using normal, conventional techniques, the quality of the water can be of a lesser quality than desirable. This may be due to old equipment, damage to pipework, or economical restrictions; and, as a result, the quality of the treatment applied to the municipal water supply, whilst being sufficient to meet any legal requirements, may be deemed to be poor and unsatisfactory by users.

This has found to be a particular problem in rural, geographically remote locations, where only a relatively small number of users are found in an expansive area. In such cases, the priority for the municipal water supply companies is to upgrade their equipment and pipework in areas of higher density, and, this leads to the rural areas being neglected and the provision of unsatisfactory municipal water in these areas.

An efficient, compact and relatively simple method and apparatus for treating and sanitising water from a water supply to create water of an acceptable and satisfactory level is desired. Generally speaking the water should be potable in the sense that the water would meet local regulatory requirements so as to be deemed as suitable drinking water.

A further problem with current water treatment systems is that the treated, sanitised water is held in a sanitised water tank for use on demand by the user. On occasion, the sanitised water will remain stagnant in the sanitised water tank for long periods of time, and consequently the hygienic and organoleptic qualities of the sanitised water will become unsatisfactory for the user. It is known to use chemicals such as chlorine, irradiators and/or aerators within the sanitised water tank to keep the quality of the sanitised water at an acceptable level. However, this solution requires additional chemicals, chemical dispensing means, aerators and/or irradiators to be provided in the water treatment system, thus adding to the construction cost, operational costs and overall complexity of the systems.

Moreover, chlorine and other chemical disinfectants which are added to water so as to treat the water and thereby reduce the microbial contamination in the water, ensuring that the water is safe to drink. However, chlorine must be allowed to persist in the water to maintain the level of purification for public health, residual chlorine in the treated water system can result in the formation of disinfectant by-products (DBPs). These DBPs are formed by the reaction of chemical disinfectants, such as chlorine, with organic matter present in the treated water. Trihalomethanes (THMs) are the most significant class of DBPs from a health perspective. They include chloroform, bromoform, dibromochloromethane and bromodichloromethane. THMs in treated water present a health risk as possible human carcinogens. In Ireland, the European Communities (Drinking Water) Regulations (No. 2), 2007 state that total trihalomethanes (THMs) should only be found in treated drinking water at levels of less than 100µg/l. In 2010, in the Republic of Ireland, it was observed that 10.7% of public drinking water supplies, 23.8% of public group water schemes and 14.5% of private group water schemes exceeded this 100µg/l limit. Thus, the sanitisation of treated water is an important health issue.

For the prior art, European Patent Application Number EP 1 695 939 (HOMEFLOW SWITZERLAND DISTRIBUTION SA) discloses a device for purifying treated water whereby the quality of the treated water is deemed to be unacceptable. The treated water is received from a water supply and is ozonated. Ozone is produced by an ozone generator and is supplied to an ozonation tank where the generated ozone and the treated water are mixed to improve the quality of the treated water. The ozonated water is then passed through a carbon filter and an alumina filter and is stored in an ozonated water storage reservoir. The ozonated water storage reservoir is also connected to the ozone generator and ozone may be introduced into the ozonated water storage reservoir to re-ozonate the ozonated water. Ozonated water is pumped out of the ozonated water storage reservoir and through an outlet nozzle upon demand by a user. A refresh cycle is also provided by directing ozonated water from the ozonated water storage reservoir back through the carbon filter and the alumina filter. The refresh process does not direct the ozonated water from the ozonated water storage reservoir back through the ozonation tank.

However, problems are known to exist with systems where ozone is used as both the primary and secondary, also known as residual, sanitizer. Ozone is not accepted as a "catch-all" sanitizer; and ozone demand for a particular batch of water to be treated, is determined based on the chemical parameters of that batch of water to be treated. Every batch of water will have a slightly different ozone demand depending on the quality of that batch of water. Although there is little in water that ozone cannot react with directly or indirectly, not all contaminants will react with ozone. For example, inert gasses are not subject to attack by ozone, and, some complex pesticides are not broken down completely by ozone. Moreover, many other man made molecules cannot be broken by ozone at normal water treatment temperatures and pressures. Therefore, whilst ozone is quite good as a primary sanitizer it cannot treat every type of contaminant that may be found in water to be treated, and it is for this reason that ozone is not considered as a "catch-all" sanitizer. Furthermore, using ozone as the primary sanitizer is relatively expensive in comparison to other primary sanitizers.

The device of European Patent Application Number EP 1 695 939 suffers from the problems mentioned hereinbefore. In particular the device disclosed in European Patent Application Number EP 1 695 939 requires an additional aerator to be provided in the ozonated water storage reservoir. Furthermore, the appropriate connections for this additional aerator are needed and this adds to the constructional cost of the device. In operation, ozone generated is used to ozonate the treated water to provide the ozonated water, but it is also used to provide ozone to the ozonated water storage reservoir. This requirement for ozone in both the ozonation treatment and the the treated water to provide the ozonated water, but it is also used to provide ozone to the ozonated water storage reservoir. This requirement for ozone in both the ozonation treatment and the ozonated water storage acts increases the operational costs. In all, the overall complexity of the device disclosed in European Patent Application Number EP 1 695 939 is increased.

US Patent 5,683,576 suffers from similar problems as it discloses using ozone as the primary and secondary sanitizer.

US Patent 6,814,876 describes a system comprising zone and a UV irradiator, but does not provide for a means to control the irradiator and the direction flow by means of non-return valves.

A cost-effective solution to the problem of keeping stagnant water in sanitised water tanks at hygienic and organoleptically satisfactory levels is sought. As such a solution would be required in most domestic homes and commercial buildings, the cost and size of the apparatus used to offer the solution are important factors.

In a further aspect of the present invention it will also be understood that in certain situations, a municipal water supply cannot be provided in a location, or in other situations the municipal water supply is simply neglected in favour of other water sources.

Thus, the ability to be able to rely not just on a treated water supply where appropriate is therefore necessary and this invention facilitates the choice of supply by the user and the security of such supply for the user.

It is a goal of the present invention to provide a method and/or apparatus that overcomes at least one of the above mentioned problems.

### Summary of the Invention

The present invention is directed towards a method of sanitising water of an unsatisfactory quality so as to produce sanitised water which is potable and of a satisfactory quality; the method comprising the steps of receiving treated water from a water supply at an inlet to a water sanitisation assembly; filtering the received treated water in an inlet particle filter to partially sanitise the treated water; passing the filtered water through a non-return valve located before an irradiator, whereby, the irradiator is provided by an ultra violet reactor comprising an ultraviolet lamp, and, whereby the filtered water is only passed into the irradiator after the ultraviolet lamp has become operational such as to act as a germicidal barrier and create ozone for an aerator; irradiating the filtered water in an irradiator to further sanitise the filtered water; ozonating the irradiated water in the aerator to sanitise the irradiated water; storing the sanitised water in a sanitised water tank; and, upon demand by a user, activating a controlled pump to pump the sanitised water out of the sanitised water tank and through an outlet filter so as to flow along a potable water supply and arrive at a dispensing outlet. The method further comprises the step of a periodical refresh cycle comprising use of a return conduit, which is arranged intermediate the potable water supply and the irradiator or the aerator, and which has a valve and a non-return valve; and, upon command of a central controller, ensuring that the irradiator is operational and opening the valve to allow the sanitised water to become refreshed by flowing through the return conduit such that, the sanitised water to be refreshed is passed through the irradiator and/or the aerator, thus allowing a periodic refresh of the sanitised water in the sanitised water tank. In a preferable embodiment, the water from the water supply is treated water.

The advantage of providing the method of the present invention is that the treated water of a water supply can be sanitised to improve the quality of the treated water using a relatively simple, cost-effective and efficient method of irradiating and aerating the water. The sanitised water can guaranteed to be of a satisfactory quality which may otherwise vary when the treated water is taken from a large main water supply network. The irradiator sanitises the water and the aerator is used as a residual sanitiser.

The method is ideal to be used in a small domestically installed water treatment assembly. Such units by their nature must be easy to install and should be of a small form factor for domestic installation. The method of the present invention and of the embodiments hereinbelow described allow for a relatively simple and effective water treatment and sanitisation assembly to be installed in a domestic dwelling.

In the present invention the irradiator also acts to form a germicidal barrier to avoid mixing of the treated water which is to be sanitised and the sanitised water. The ultraviolet reactor is operational whilst treated water to be sanitised is passed through the irradiator, and thus no unwanted mixing will occur as any water which is outlet from the irradiator has been treated.

In a preferred embodiment, the irradiator is provided by use of an ultra violet reactor which comprises an ultra violet lamp surrounded by an outer and an inner sleeve; such that the treated water is passed through the outer spacing, between the outer sleeve and the inner sleeve, and, air or an oxygen-carrying gas is passed through the inner spacing, between the inner sleeve and the outer sleeve. In this embodiment, the water is irradiated by the ultra violet reactor and the ozone, which is entrained into the irradiated water, is created by the same ultra violet reactor. This germicidal barrier effect is the third role that the ultra violet reactor is used to carry out. In prior art systems, germicidal barriers are created by separate membranes and/or filters, which delineated the treated water which is to be sanitised, from the sanitised water itself. From a component part size perspective, using the same ultra violet reactor to sanitise the water through irradiation, create the ozone required for residual sanitisation and also act as a germicidal barrier is highly advantageous.

In a further embodiment, the method further comprises passing the filtered water through a non-return valve located after the irradiator when the return conduit is arranged intermediate the potable water supply and the aerator.

The use of the non-return valves ensures that there is a clear delineation between the treated water which is to be sanitised, and, the sanitised water itself. Once the treated water passes the non-return valve, the treated water to be sanitised can only then pass through the irradiator so as to become sanitised, and thus suitable and satisfactory for consumption by a user. Furthermore, even if a non-return valve should fail, the irradiator which acts as the germicidal barrier in the present will ensure that any treated water flowing onward would be sanitised in any case.

In a further embodiment, the steps of refreshing unsatisfactory sanitised water which is stored in the sanitised water tank, further comprising the steps of opening the valve on the return conduit where the valve is arranged intermediate the potable water supply and the irradiator; pumping the unsatisfactory sanitised water out of the sanitised water tank and through the return conduit into the irradiator; irradiating the unsatisfactory sanitised water in the irradiator to partially refresh the unsatisfactory sanitised water; ozonating the irradiated water in the aerator to refresh the irradiated water; and, storing the refreshed water in the sanitised water tank.

A simple refresh method as hereinabove described allows for a simple and small water sanitisation assembly to be built and installed domestically.

The method of refreshing the unsatisfactory sanitised water further comprises the step of passing the unsatisfactory sanitised water through a refresh non-return valve located before the irradiator.

In a further embodiment, the steps of refreshing unsatisfactory sanitised water which is stored in the sanitised water tank, further comprises the steps of opening the valve on the return conduit where the valve is arranged intermediate the potable water supply and the aerator; pumping the unsatisfactory sanitised water out of the sanitised water tank and through the return conduit into the aerator; ozonating the unsatisfactory sanitised water in the aerator to refresh the unsatisfactory sanitised water; and, storing the refreshed water in the sanitised water tank.

The ultra violet reactor must be operational for ozone to be created which is used by the aerator during the refresh. As the ultra violet reactor is operational, the ultra violet reactor acts as the germicidal barrier during the refresh as well. Thus it can be seen that, while treated water is passed through the irradiator, the ultra violet reactor is operational and acts as a germicidal barrier; and, when already sanitised water is passed back through just the aerator for a refresh, the ultra violet reactor must be operational to create ozone and thus continues to act as the germicidal barrier. In this manner, the preferred embodiment where the irradiator is provided by the ultra violet reactor is particularly advantageous as the ultra violet reactor sanitises the water supply by irradiation, creates the ozone for the residual sanitisation, creates ozone for the refresh where just the aerator is used to refresh the already sanitised water, and acts as a germicidal barrier in the operating modes where a sanitisation is being carried out and where a refresh is being carried out. As these are the only two operating modes where the water will be flowing, it can be seen that the ultra violet reactor is the germicidal barrier required. This is advantageous where a component parts carries out four different roles within the method.

In a further embodiment, the method further comprises the step of monitoring pressure in the potable water supply using a pressure sensor so as to detect a drop in pressure which would indicate a demand by the user; and, activating the pump upon detection of such a drop in the pressure.

The present invention is further directed towards a water sanitisation assembly for sanitising water of an unsatisfactory quality so as to produce sanitised water which is potable and of a satisfactory quality, the water sanitisation assembly comprising an inlet to receive water from a water supply; an inlet particle filter to filter the received water so as to partially sanitise the treated water; a non-return valve, located before an irradiator; the irradiator to irradiate the filtered water so as to further sanitise the filtered water, whereby the irradiator is provided by an ultra violet reactor comprising an ultraviolet lamp; a controller, which will only allow the filtered water to be passed into the irradiator after the ultraviolet lamp has become operational such as to act as a germicidal barrier and create ozone for an aerator; the aerator to entrain the irradiated water with ozone so as to ozonate the water and in doing so sanitise the irradiated water; a sanitised water tank to receive and store the sanitised water; and, a controlled pump to pump the sanitised water from the sanitised water tank, through an outlet filter so as to flow along a potable water supply to a dispensing outlet. The water sanitisation assembly is further characterised in that it comprises a return conduit, which is arranged intermediate the potable water supply and the irradiator or the aerator, to pass sanitised water which is to be refreshed through the irradiator and/or the aerator; a valve which is located along the return conduit so as to open and close the return conduit respectively, and, which is configured to be opened upon command by the controller to allow the sanitised water which is to be refreshed to pass through the return conduit, thus allowing a periodic refresh of the sanitised water in the sanitised water tank; and, a non-return valve located before the irradiator or the aerator. Preferably, the water from the water supply is treated water, that is to say, water that has already been treated to a legally acceptable level, for example a potable level, but is unsatisfactory for the consumer to drink.

The water sanitisation assembly further comprises a non-return valve located before the irradiator.

In a further embodiment, the water sanitisation assembly further comprises a non-return valve located immediately before the irradiator.

In a further embodiment, the water sanitisation assembly further comprises a non-return valve located after the irradiator when the return conduit is arranged intermediate the potable water supply and the aerator.

In a further embodiment, the water sanitisation assembly further comprises a non-return valve located immediately after the irradiator.

In a further embodiment, the refresh non-return valve on the return conduit is located immediately before the irradiator.

In a further embodiment, the water sanitisation assembly comprises a return conduit which is arranged intermediate the potable water supply and the aerator; and, a valve is located along the return conduit which can be opened and closed so as to open and close the return conduit respectively, thus allowing a periodic refresh of the sanitised water in the sanitised water tank.

In a further embodiment, the water sanitisation assembly further comprises a refresh non-return valve on the return conduit.

In a further embodiment, the refresh non-return valve on the return conduit is located immediately before the irradiator.

In a further embodiment, the water sanitisation assembly comprises a return conduit which is arranged intermediate the potable water supply and the aerator; and, a valve is located along the return conduit which can be opened and closed so as to open and close the return conduit respectively, thus allowing a periodic refresh of the sanitised water in the sanitised water tank.

In a further embodiment, the water sanitisation assembly further comprises a refresh non-return valve on the return conduit.

In a further embodiment, the refresh non-return valve on the return conduit is located immediately before the aerator.

In a further embodiment, the water sanitisation assembly further comprises a pressure sensor so as to monitor pressure in the potable water supply and detect a drop in the pressure in the potable water supply which would indicate a demand for the sanitised water by the user; and, means for activating the pump upon detection of such a drop in the pressure by the pressure sensor.

The present invention is further directed towards a method of sanitising a water supply to produce a potable water supply, the method comprising the steps of passing a water supply through an inlet filter; irradiating the filtered water with ultraviolet light; entraining the irradiated water with a gas to sanitise the water; storing the sanitised water in a sanitised water tank; and, pumping the sanitised water from the sanitised water tank through an outlet filter to produce a potable water supply.

The advantage of providing the method of the present invention is that a water supply, which may already have been treated and is supplied as a potable municipal water supply, can be re-sanitised to improve the quality of the water using a relatively simple, cost-effective and efficient method of irradiating and aerating the water supply.

In a further embodiment, the method further comprises the steps of refreshing the sanitised water by pumping the sanitised water from the sanitised water tank through a return conduit; passing the pumped water through a non-return valve located on the return conduit; irradiating the pumped water with the ultraviolet light; entraining the irradiated water with a gas to refresh the water; and, returning the refreshed water to the sanitised water tank.

This feature is seen as particularly advantageous as a simple return conduit can be used to refresh the already sanitised water at regular intervals in order to ensure that any stagnant sanitised water in the sanitised water tank is re-circulated through the water sanitisation system to maintain the sanitised water, stored for use on demand by the user, at acceptable hygienic and organoleptic levels.

A further advantage of the present invention is that the water can be sanitised and refreshed without the use of chemicals such as chlorine.

In a further embodiment, the method further comprises the steps of refreshing the sanitised water by pumping the sanitised water from the sanitised water tank through a return conduit; passing the pumped water through a non-return valve located on the return conduit; entraining the pumped water with a gas to refresh the water; and, returning the refreshed water to the sanitised water tank. In this embodiment, the already sanitised water advantageously does not need to be fed through both the irradiator and aerator to be refreshed; therefore, the water sanitisation method in this embodiment is simplified. In a preferred embodiment where an ultra violet reactor is used to create the ozone for the aerator, the ultra violet reactor will act as a germicidal barrier during the refresh so that no unwanted mixing occurs.

In a further embodiment, the method further comprises the step of passing the water from inlet filter through a non-return valve prior to irradiating the filtered water with the ultraviolet light. The use of the non-return valve creates a germicidal barrier between the water which is input to the water sanitisation assembly, and the already sanitised water stored in the sanitised water tank of the water sanitisation assembly.

In a further embodiment, the method further comprises the step of passing the irradiated water through a non-return valve prior to entraining the irradiated water with a gas to sanitise the water. The use of the non-return valve assists with creating a germicidal barrier between the water which is input to the water sanitisation assembly, and the already sanitised water stored in the sanitised water tank of the water sanitisation assembly.

In a further embodiment, the step of pumping the sanitised water from the sanitised water tank through an outlet filter to a potable water supply is carried out in response to a control signal from a pressure switch located on the potable water supply.

In a further embodiment, the step of pumping the sanitised water from the sanitised water tank through an outlet filter comprises the step of pumping the sanitised water from the sanitised water tank through a carbon filter. The use of a carbon filter is seen as particularly advantageous as the carbon acts as a catalyst to convert any residual ozone, left in the water as a result of the entraining of the water in the aerator, preferably a venturi tube, into oxygen. The carbon filter will also assist in improving the taste of the water.

In a further embodiment, the steps of refreshing the sanitised water further comprise the step of pumping the sanitised water from the sanitised water tank through a motorised shut-off valve prior to passing the pumped water through the non-return valve.

In a further embodiment, the step of entraining the water with a gas comprises entraining the water with a bactericide that is formed using an ultraviolet light.

In a further embodiment, the bactericide is ozone which is formed by circulating air or oxygen in front of the ultraviolet light.

The present invention is further directed towards a water sanitisation assembly for producing a potable water supply from a water supply, the assembly comprising a water supply inlet connecting the water supply to an inlet filter; an irradiator connected to the inlet filter, the irradiator receiving filtered water from the inlet filter and comprising an ultraviolet light to irradiate the filtered water; an aerator connected to the irradiator, whereby the aerator receives irradiated water from the irradiator and entrains the irradiated water with a gas to sanitise the water; a sanitised water tank connected to the aerator to store the sanitised water; and, a supply pump external to the sanitised water tank to pump the sanitised water through an outlet filter to a produce the potable water supply.

The advantage of providing the method of the present invention is that a water supply, which may already have been treated and is supplied as a potable municipal water supply, can be sanitised to improve the quality of the water using a relatively simple, cost-effective and efficient method of irradiating and aerating the water.

In a further embodiment, the assembly further comprises a return conduit from the potable water supply to the irradiator, the return conduit comprising a non-return valve.

In a further embodiment, the assembly further comprises a return conduit from the potable water supply to the aerator, the return conduit comprising a non-return valve

This feature is seen as particularly advantageous as a simple return conduit can be used to refresh the already sanitised water at regular intervals in order to ensure that any stagnant sanitised water in the sanitised water tank is re-circulated through the water sanitisation system to maintain the sanitised water, stored for use on-demand by the user, at acceptable and satisfactory hygienic levels. The non-return valve forms part of the germicidal barrier between the sanitised water which can be found adjacent an outlet side of the water sanitisation assembly, located in the assembly after the aerator and irradiator; and, the unsanitised water received from the water supply on an inlet side of the water sanitisation assembly.

In a further embodiment, the assembly further comprises a non-return valve between the inlet filter and the irradiator. The use of the non-return valve creates a germicidal barrier between the water which is input to the water sanitisation assembly, and the already sanitised water stored in the sanitised water tank of the water sanitisation assembly.

In a further embodiment, the assembly further comprises a pressure switch located on an outlet of the potable water supply to control the operation of the supply pump.

In a further embodiment, the outlet filter comprises a carbon filter. The use of a carbon filter is seen as particularly advantageous as the carbon acts as a catalyst to convert any residual ozone, left in the water as a result of the entraining of the water in the aerator into oxygen. The carbon filter will also assist in improving the taste of the water.

In a further embodiment, the return conduit further comprises a motorised shut-off valve located on the return conduit before the non-return valve.

In a further embodiment, the gas entraining the water is a bactericide which is formed using an ultraviolet light.

In a further embodiment, the bactericide is ozone which is formed by circulating air or oxygen in front of the ultraviolet light.

### Detailed Description of Embodiments

The invention will be more clearly understood from the following description of some embodiments thereof, given by way of example only, with reference to the accompanying drawings, in which:
Figure 1 is a diagrammatic view of an apparatus for sanitising water from a water supply in accordance with the present invention;
Figure 2 is a diagrammatic view of an apparatus for sanitising water from a water supply in accordance with a further embodiment of the present invention; and,
Figure 3 is a diagrammatic view of an apparatus for sanitising water from a water supply in accordance with another embodiment of the present invention.

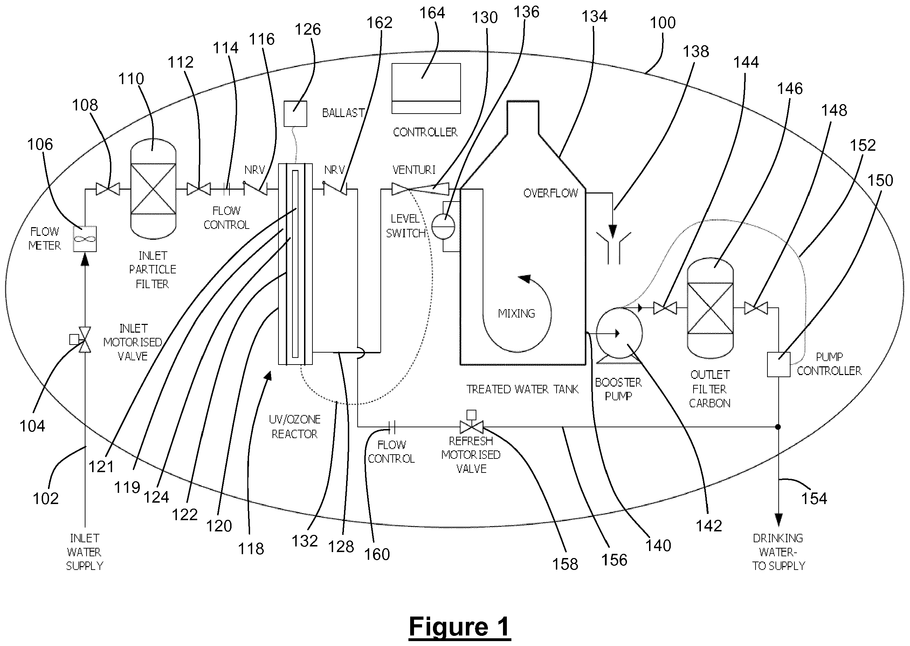

Referring to Figure 1, there is provided an assembly for sanitising water from a water supply to produce a potable water supply, the water sanitisation assembly being indicated generally by reference numeral 100.

The water sanitisation assembly 100 receives a water supply 102 which is input to the water sanitisation assembly 100 through a motorised inlet valve 104. A flow meter 106 measures the flow rate of the water entering into the water sanitisation assembly 100 from the water supply 102 and this flow rate information is forwarded to a central controller 164 to assist the central controller 164 in making decisions regarding the operation of the water sanitisation assembly 100. For example, the flow meter 106 can be used to warn a user of the water sanitisation assembly 100 if the flow rate of water in the water sanitisation assembly 100 is too low for component parts, described hereinbelow, of the water sanitisation assembly 100 to operate correctly; a low flow rate can be caused by a fault in the water supply 102.

The water supply 102 is passed through an inlet filter 110. The inlet filter 110 is a particle filter, preferably a 5 micron particle filter, which is used to remove any fine, suspended solids from the water supply 102. Manual shut-off valves 108, 112 are provided on either side of the inlet filter 110. A flow controller 114 controls the flow rate of water output from the inlet filter 110 to maintain a flow rate less than or equal to the maximum flow rating of the water sanitisation assembly 100, or, component parts as described hereinbelow, of the water sanitisation assembly 100. If the inlet filter 110 becomes blocked over time, this blockage in the inlet filter 110 may also cause a low flow rate as referred to hereinbefore. The flow controller 114 sets a maximum water flow rate through an irradiator, indicated generally by reference numeral 118, so that a thorough and full sanitisation of the water can be carried out in the irradiator 118 and the remainder of the water sanitisation assembly 100. If the flow rate was too high, this would result in an insufficient dose of irradiating UV light from the irradiator 118 being subjected to the water passing through the irradiator 118, as described further hereinbelow.

A non-return valve 116 is provided at an inlet side of the irradiator 118. The non-return valve 116 ensures that any water which passes through into the irradiator 118 can only proceed onward through the water sanitisation assembly 100 from that point and can only be output via a potable water supply 154 or an overflow dump 138. In this manner, contamination of previously sanitised water is avoided.

The irradiator 118, which is preferably provided by an ultra violet reactor comprising an ultraviolet lamp 121 providing ultraviolet light which irradiates the water from the water source 102 as it passes through an outer spacing 119 formed between an outer sleeve 120 of the irradiator 118 and an inner sleeve 122 of the irradiator 118. The outer spacing 119 has a substantially annular transverse cross-section. The ultraviolet lamp 121 emits ultraviolet light having wavelengths of substantially 254nm and substantially 185nm. The inner sleeve 122 is comprised of a fused quartz tube, preferably such as the fused quartz tube sold under the registered trademark GE214 which blocks the transmission of the 185nm producing wavelength. The inner sleeve 122 allows the ultraviolet light which has a wavelength of substantially 254nm to pass through the inner sleeve 122 to irradiate the water from the water supply 102 which flows through the outer spacing 119. In accordance with best practice, the water from the water supply 102 is irradiated in this outer spacing 119 with a dose of ultraviolet light having a wavelength of substantially 254nm, and, in an amount of at least 40mJ/cm². Furthermore, the inner sleeve 122 blocks the ultraviolet light having a wavelength of substantially 185nm from entering this outer spacing 119, in accordance with best practice.

The irradiator 118 which is preferably provided by an ultra violet reactor in this embodiment, the ultra violet reactor also comprising an inner spacing 124 between the inner sleeve 122 and the ultraviolet lamp 121; the inner spacing 124 also has a substantially annular transverse cross-section. An oxygen-carrying gas, such as air, is firstly preferably filtered (not shown) and then drawn through the inner spacing 124, between the inner sleeve 122 and the ultraviolet lamp 121, as a result of a pressure differential caused by an aerator 130 located after the irradiator 118 in the water sanitisation assembly 100. As the oxygen or air is drawn through the inner spacing 124, the oxygen itself, or the oxygen in the air, reacts with the ultraviolet light having a wavelength of substantially 185 nm to convert the oxygen into ozone. This ozone is then provided to the aerator 130 via an ozone feed 132.

Ballast 126 controls the ultraviolet lamp 121 emitting the ultraviolet light.

Irradiated water is passed along piping 128 from the irradiator 118 to the aerator 130. The aerator 130 entrains the irradiated water with a gas to sanitise the water. Preferably, entraining the water is achieved with a bactericide which is formed using the ultraviolet light, and in the most preferable embodiment as shown in Figure 1, the bactericide is ozone which is produced by drawing air or oxygen through the irradiator 118 as described hereinbefore. The ozone is supplied to the aerator 130 through the ozone feed 132 and the irradiated water is entrained with the ozone to sanitise the water so that the water is potable and is at a satisfactory level for the user.

The sanitised water is then passed into a sanitised water tank 134, which can be alternatively known as a treated water tank. The sanitised water mixes with any existing sanitised water in the sanitised water tank 134, as shown in Figure 1. An overflow dump 138 is provided adjacent an uppermost portion of the sanitised water tank 134. A level switch 136 is provided on the sanitised water tank 134 to signal to the central controller 164 when the level of the stored sanitised water drops below a predetermined threshold within the sanitised water tank 134. A sanitised water tank outlet 140 is provided adjacent a lowermost portion of the sanitised water tank 134 and is connected to a booster pump 142 which pumps the sanitised water out of the sanitised water tank 134.

The pumped water exiting the booster pump 142 passes through an outlet filter 146, which is preferably a carbon filter as shown in Figure 1. Manual shut-off valves 144, 148 are provided on either side of the outlet filter 146. The sanitised, pumped, filtered water output from the outlet filter 146 passes through a pump controller 150, which preferably comprises a pressure switch (not shown), and then onward to produce a potable water supply 154 through a dispensing outlet. The pump controller 150 is connected to the booster pump 142 by a pump controller feed 152.

A return conduit 156 branches off the potable water supply 154 and passes through a motorised valve 158, a flow controller 160 and a non-return valve 162 to be connected to the inlet side of the irradiator 118. In this manner, already sanitised water can be allowed to flow along the return conduit 156, by opening the motorised valve 158, back into the irradiator 118 to be irradiated with the ultraviolet light and passed through the aerator 130 so that the water becomes re-ozonated and passed into the sanitised water tank 134. The re-ozonated water mixes with the water in the sanitised water tank 134 to refresh at least some of the water in the sanitised water tank 134. The non-return valve 162 creates an important barrier to ensure that water which has not passed through the irradiator 118 and the aerator 130 to become sanitised, cannot pass along the return conduit 156 to form part of the potable water supply 154. As before, the flow controller 160 sets a maximum water flow rate through the irradiator 118 so that a thorough and full sanitisation of the water passing through the irradiator 118 can be carried out in the irradiator 118, or in the part of the water sanitisation assembly 100 being used to refresh the already sanitised water.

In effect, the non-return valves 116, 162 and the irradiator 118 combine to create a germicidal barrier to ensure that contamination between sanitised water and other types of water in the water sanitisation assembly 100 cannot take place. This is of upmost importance so that the integrity of the water sanitisation assembly can be maintained and it ensures that all of the sanitised water which is output from the dispensing outlet on the potable water supply 154 is of the required quality. Even if a non-return valve 116, 162 were to fail, the irradiator 118 acting alone as the germicidal barrier would be sufficient. In this manner, a safety redundancy is built into the present invention, whilst at the same time there is not a necessity for a separate membrane or filter to act as the germicidal barrier.

The arrangement of the non-return valves 116, 162 adjacent, and preferably immediately adjacent, the irradiator 118 cause a germicidal barrier to be formed which ensures that all of the sanitised water which is output from the dispensing outlet on the potable water supply 154 is of the required quality.

In use, water from the water supply 102 is filtered by the inlet filter 110, and, is sanitised using the irradiator 118 and the aerator 130 prior to being stored in the sanitised water tank 134.

As potable water is required by a user, a tap or other such valve, will be opened by the user and potable water will start to flow from the potable water supply 154. The pump controller 150 will detect a demand for potable water and signal along a pump controller feed 152 to the booster pump 142 to begin pumping sanitised water from the sanitised water tank 134 through the outlet filter 146 to the potable water supply 154. The pump controller 150 may preferably comprise a pressure switch (not shown) which can detect a drop in pressure on the potable water supply 154, thus indicating a demand for potable water by the user.

If the level switch 136 in the sanitised water tank 134 detects that the amount of sanitised water in the sanitised water tank 134 has fallen below a predetermined threshold, then the level switch 136 signals this to the central controller 164 and a fill cycle commences. During a fill cycle, the central controller 164 firstly commands the ballast 126 to start up the ultraviolet lamp, and after a preset warm-up time has elapsed, the central controller 164 subsequently allows water from the water supply 102 to be input into the water sanitisation assembly 100 by opening the motorised valve 104.

In this manner, the water sanitisation assembly 100 ensures that the irradiator 118 is operating correctly so that any water passed through the irradiator 118 will be irradiated with the sufficient amount of ultraviolet light as required under regulatory, legal and best practice requirements. The flow meter 106 can ensure that water is entering into the water sanitisation assembly from the water supply 102 and can signal to the central controller 164 if a low flow rate, or zero flow rate, is detected. Once the water from the water supply 102 passes through the non-return valve 116, the water will be irradiated using the irradiator 118 and will be entrained with ozone using the aerator 130 to sanitise the water.

In this manner, a constant supply of sanitised water may be maintained in the sanitised water tank 134, and, the sanitised water can be pumped out of the sanitised water tank 134 to the potable water supply on-demand by the user.

To overcome the problem of stagnant sanitised water in the sanitised water tank 134 becoming unsatisfactory for consumption by the user, the already sanitised water is periodically refreshed during refresh cycles. During a refresh cycle the already sanitised water is fed back through the return conduit 156 so that the already sanitised water passes back into the irradiator 118 to be irradiated and onward to the aerator 130 to be ozonated and consequently refreshed.

To begin a refresh cycle, the central controller 164 periodically opens the motorised valve 158 on the return conduit 156 to allow the sanitised water to flow into the irradiator 118. The pump controller 150 will determine that there is a demand for the sanitised water, and, consequently will operate the booster pump 142 to pump sanitised water from the sanitised water tank 134 along the return conduit 156 into the irradiator 118, to satisfy the demand.

During such a refresh cycle, the central controller 164 firstly commands the ballast 126 to start up the ultraviolet lamp, and after a preset warm-up time has elapsed, the central controller 164 subsequently allows the already sanitised water from the sanitised water tank 134 to be pumped into the irradiator 118 by opening the motorised valve 158. As mentioned hereinbefore, this ensures that the ultraviolet lamp is operating at the correct operational capacity to irradiate the water correctly.

The booster pump 142 must be sufficiently powerful to allow sanitised water to be consumed by a user through the potable water supply 154 and contemporaneously pump already sanitised water back through the irradiator 118 and the aerator 130 to re-ozonate and refresh the already sanitised water which is pumped through the return conduit 156. The already sanitised water in the sanitised water tank 134 which is not pumped back around the system will also be refreshed as the refreshed, re-ozonated water which is passed back into the sanitised water tank 134 refreshes at least some of the sanitised water in the sanitised water tank 134 by mixing and re-ozonating the already sanitised water in the sanitised water tank 134.

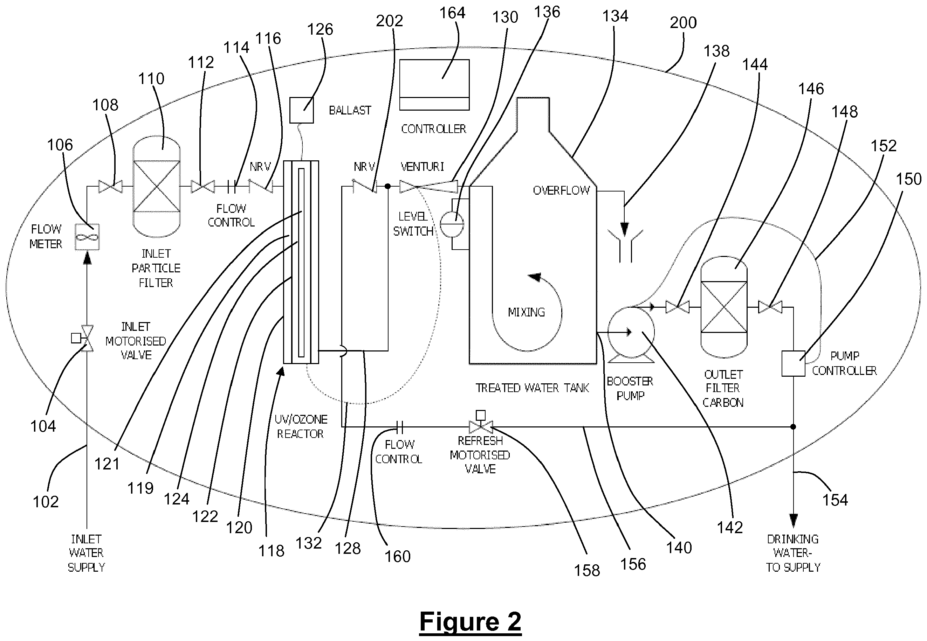

With reference to Figure 2, with like parts hereinbefore described having the same reference numerals, there is provided a further embodiment of an apparatus for sanitising water from a water supply to produce a potable water supply, the apparatus being indicated generally by reference numeral 200.

The return conduit 156 passes the already sanitised water pumped from the sanitised water tank 134 into the aerator 130 to refresh the already sanitised water. In this embodiment, the irradiator 118 is not used during the refresh process. A non-return valve 202 is located at an inlet side of the aerator 130 and ensures that water which has only been irradiated by the irradiator 118, and is provided to the inlet side of the aerator 130 through piping 128, cannot pass through the return conduit 156 to form part of the potable water supply 154. In this manner, the non-return valve 202 in conjunction with the irradiator 118 and the non-return valve 116 combine to create a germicidal barrier between sanitised water and other types of water in the water sanitisation assembly 200. This is advantageous as the irradiator does not need to be used to irradiate the already sanitised water during refresh cycles, yet the irradiator will be operational during the refresh as it must create ozone for the aerator 130 and thus the irradiator 118 will sanitise any water which may accidentally pass through the irradiator 118 due to a component failure, such as a failure of the non-return valve 116.

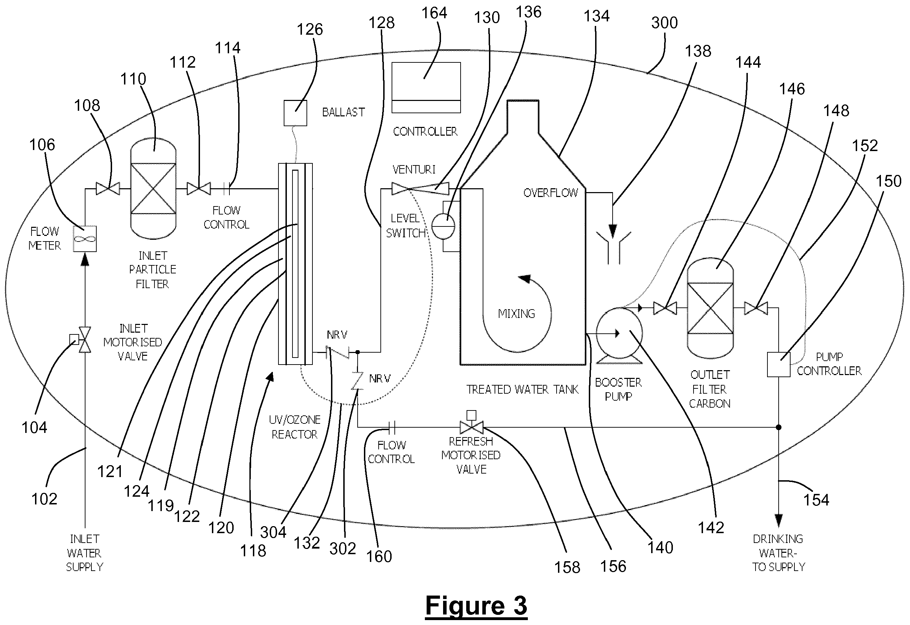

Referring to Figure 3, with like parts hereinbefore described having the same reference numerals, there is provided a further embodiment of an apparatus for sanitising water from a water supply to produce a potable water supply, the apparatus being indicated generally by reference numeral 300.

A non-return valve 302 is provided on the return conduit 156 prior to the piping 128 which is connected to the inlet side of the aerator 130. Furthermore a non-return valve 304 is located at an outlet side of the irradiator 118, between the outlet side and the piping 128. The non-return valves 302, 304 combined to form a germicidal barrier which prevents any water which has passed into the piping 128 from flowing back towards the water supply 102 through the irradiator 118; or, back towards the potable water supply 154 through the return conduit 156.

It is envisaged that the irradiator 118 and the aerator 130 are capable of irradiating or entraining respectively, contemporaneously a feed of already sanitised water to be refreshed, and, a feed of water from the water supply 102 which is to be sanitised for the first time. Furthermore, the irradiator 118 will be capable of irradiating oxygen, or air, to create a sufficient amount of ozone to satisfy the ozone demands of the aerator 130 if the aerator 130 is entraining both a feed of already sanitised water to be refreshed and a feed of water from the water supply 102 which is to be sanitised for the first time.

It will be readily understood that the central controller 164 can monitor flow rates at various points throughout the water sanitisation assembly 100, 200, 300 using the flow meter 106 and/or the flow controllers 114, 160 to ensure that blockages and malfunctioning equipment do not cause a problem for the normal operation of the water sanitisation assembly 100, 200, 300. Any such blockages or malfunctioning equipment may be communicated to the user via a human machine interface (not shown), which may preferably be a display.

It will be further understood that the exact layout of the water sanitisation assembly 100, 200, 300 may alter provided that the basic principle of creating a germicidal barrier through the use of non-return valves is adhered to. For example, the irradiator 118 and aerator 130 may switch positions so that the water from the water supply 102 is first entrained with ozone prior to irradiation with the ultraviolet light.

Furthermore, in a further embodiment, an air gap (not shown) may be provided at the water supply 102 to provide an isolation, germicidal barrier between the sanitized water which, in this embodiment, would be defined as being any water in the water sanitisation assembly 100, 200, 300 and unsanitised water, which in this embodiment, would be defined as being any water yet to enter into the water sanitisation assembly 100, 200, 300. This air gap is advantageous as it provides a physical barrier between the water sanitisation assembly 100, 200, 300 and the inlet water supply 102.

Furthermore, the above process may be applied to a rainwater treatment assembly, where an internal refresh of treated rainwater, through the return conduit 156, can be easily effected.

Component parts such as motorised valves, manual shut-off valves and the like may be alternatively replaced using solenoid valves or inlet pumps, which would be used in the embodiment having the air gap, or other such well-known alternatives. Well-known protective components may be incorporated into the water sanitisation assembly 100, 200, 300 to ensure that the booster pump 142 does not operate without a sufficient amount of water flowing through the booster pump. Safety shut-off features to prevent dry pumping may be advantageously used for this purpose. Such safety shut-off features may advantageously form part of the pump controller 150.

If the ultraviolet lamp fails to start, an error signal may be sent to the central controller 164 to alert the central controller 164 and prevent the motorised valves 104, 158 from being opened. Furthermore, a visual and/or audible warning may be given to the user via the human machine interface of the water sanitisation assembly 100, 200, 300.

The water sanitisation assembly 100, 200, 300 may preferably periodically refresh the already sanitised water once every 2 hours, 4 hours or 6 hours.

The aerator 130 may be preferably provided by way of a venturi tube, or other such constricted flow assembly which causes the venturi effect.

It will be understood that the water sanitisation processes as described hereinbefore sanitise, freshen, deodorise, ozonate and oxygenate the water in the water sanitisation assembly 100, 200, 300.

It will be understood that the refresh processes as described hereinbefore re-sanitise, refresh, re-ozonate and re-oxygenate the already sanitised water in the water sanitisation assembly 100, 200, 300.

Throughout the preceding specification, the terms "sanitisation" and "treatment", and any grammatical variations thereof, have been used interchangeably to refer to the process of removing particles from a water supply and to freshen, deodorise and re-oxygenate the water supply to a potable level which is legally acceptable.

It will be understood that the term "satisfactory", which has been used throughout the specification, refers to a quality of sanitised water which has acceptable organoleptic properties relating to taste and smell for a consumer and is potable. The term "unsatisfactory" will be understood to refer to water, which is likely to have been treated already, and while not being of an acceptable organoleptic quality level and may also not be of a legally acceptable quality This may be due to water stagnation (or the age of the water) which has led to the establishment of bacteria and contaminants. The US EPA Effects of Water Age on Distribution System Water Quality (2002) have specifically identified the problems of stagnation which include chemical, biological and physical issues with certain water quality problems having a direct potential public health impacts. For example, chemical issues would include disinfection by-product formation such as bromate, bromodichloromethane, bromoform, chlorate, chlorite, chloroform, dibromoacetonitrile, dibromochloromethane, dichloroacetate, dichloroacetonitrile, monochloroacetate, N-nitrosodimethylamine, trichloroacetate, trihalomethanes, haloacetic acid, haloacetonitriles, haloketones, chlorohydrate, or, chloropicrine.

Whilst it will be readily understood that the present invention is primarily directed towards a small water treatment apparatus for domestic houses whereby a treated water supply of unsatisfactory quality is re-treated, or sanitised, so as to produce acceptable, potable water for the house, the apparatus may be installed in commercial buildings and the like. Moreover, the apparatus may be used to treat for the first time, or sanitise, water from a fresh water source such as a well or lake water or other such fresh water supply.

The terms "comprise" and "include", and any variations thereof required for grammatical reasons, are to be considered as interchangeable and accorded the widest possible interpretation.

The invention is not limited to the embodiments hereinbefore described which may be varied in both construction and detail.

## Claims

1. A method of sanitising treated water (102) of an unsatisfactory quality so as to produce sanitised water which of a satisfactory quality; the method comprising the steps of:
- receiving treated water from a water supply (102) at an inlet (104) to a water sanitisation assembly (100);
- filtering the received treated water (102) in an inlet particle filter (110) to partially sanitise the treated water;
- passing the filtered water through a non-return valve (116) located before an irradiator (118), whereby, the irradiator is provided by an ultra violet reactor comprising an ultraviolet lamp (121), and, whereby the filtered water is only passed into the irradiator (118) after the ultraviolet lamp (121) has become operational such as to act as a germicidal barrier and create ozone for an aerator (130);
- irradiating the filtered water in the irradiator (118) to further sanitise the filtered water;
- ozonating the irradiated water in the aerator (130) to sanitise the irradiated water;
- storing the sanitised water in a sanitised water tank (134); and,
- upon demand by a user, activating a controlled pump (142) to pump the sanitised water out of the sanitised water tank (134) and through an outlet filter (146) so as to flow along a potable water supply (154) and arrive at a dispensing outlet;
**characterised in that**, the method further comprises the step of a periodical refresh cycle comprising:
- using a return conduit (156) which is arranged intermediate the potable water supply (154) and the irradiator (118), and which has a valve (158) and a non-return valve (162),
- upon command of a central controller (164), ensuring that the irradiator (118) is operational and opening the valve (158) to allow the sanitised water to become refreshed by flowing through the return conduit (156) such that, the sanitised water to be refreshed is passed through the irradiator (118) and the aerator (130), thus allowing a periodic refresh of the sanitised water in the sanitised water tank (134).

2. A method of sanitising treated water as claimed in claim 1, wherein, the step of refreshing unsatisfactory sanitised water which is stored in the sanitised water tank (134) further comprises the steps of:
- opening the valve (158) on the return conduit (156), where the valve (158) is arranged intermediate the potable water supply (154) and the irradiator (118);
- pumping the unsatisfactory sanitised water out of the sanitised water tank (134) and through the return conduit (156) into the irradiator (118);
- irradiating the unsatisfactory sanitised water in the irradiator (118) to partially refresh the unsatisfactory sanitised water;
- ozonating the irradiated water in the aerator (130) to refresh the irradiated water; and,
- storing the refreshed water in the sanitised water tank (134).

3. A method of sanitising treated water (102) of an unsatisfactory quality so as to produce sanitised water which of a satisfactory quality; the method comprising the steps of:
- receiving treated water from a water supply (102) at an inlet (104) to a water sanitisation assembly (100);
- filtering the received treated water (102) in an inlet particle filter (110) to partially sanitise the treated water;
- passing the filtered water through a non-return valve (116) located before an irradiator (118), whereby, the irradiator is provided by an ultra violet reactor comprising an ultraviolet lamp (121), and, whereby the filtered water is only passed into the irradiator (118) after the ultraviolet lamp (121) has become operational such as to act as a germicidal barrier and create ozone for an aerator (130);
- irradiating the filtered water in the irradiator (118) to further sanitise the filtered water;
- ozonating the irradiated water in the aerator (130) to sanitise the irradiated water;
- storing the sanitised water in a sanitised water tank (134); and,
- upon demand by a user, activating a controlled pump (142) to pump the sanitised water out of the sanitised water tank (134) and through an outlet filter (146) so as to flow along a potable water supply (154) and arrive at a dispensing outlet;
**characterised in that**, the method further comprises the step of a periodical refresh cycle comprising:
- using a return conduit (156) which is arranged intermediate the potable water supply (154) and the aerator (130), and which has a valve (158) and a non-return valve (202),
- upon command of a central controller (164), ensuring that the irradiator (118) is operational and opening the valve (158) to allow the sanitised water to become refreshed by flowing through the return conduit (156) such that, the sanitised water to be refreshed is passed through the aerator (130), thus allowing a periodic refresh of the sanitised water in the sanitised water tank (134).

4. A method of sanitising treated water as claimed in claim 3, wherein, the method further comprises passing the irradiated water through a non-return valve (304) located after the irradiator (118) when the return conduit (156) is arranged intermediate the potable water supply (154) and the aerator (130).

5. A method of sanitising treated water as claimed in claim 3 or 4, wherein, the step of refreshing unsatisfactory sanitised water which is stored in the sanitised water tank (134) further comprises the steps of:
- opening the valve (158) on the return conduit (156), where the valve (158) is arranged intermediate the potable water supply (154) and the aerator (130);
- pumping the unsatisfactory sanitised water out of the sanitised water tank (134) and through the return conduit (156) into the aerator (130);
- ozonating the unsatisfactory sanitised water in the aerator (130) to refresh the unsatisfactory sanitised water; and,
- storing the refreshed water in the sanitised water tank (134).

6. A water sanitisation assembly (100) for sanitising treated water (102) of an unsatisfactory quality so as to produce sanitised water which is potable and of a satisfactory quality, the water sanitisation assembly (100) comprising:
- an inlet to receive treated water from a water supply;
- an inlet particle filter (110) to filter the received water so as to partially sanitise the treated water;
- a non-return valve (116), located before an irradiator (118);
- the irradiator (118) to irradiate the filtered water so as to further sanitise the filtered water, whereby, the irradiator is provided by an ultra violet reactor comprising an ultraviolet lamp (121);
- a controller (164) which will only allow the filtered water to be passed into the irradiator (118) after the ultraviolet lamp (121) has become operational such as to act as a germicidal barrier and create ozone for an aerator (130);
- the aerator (130) to entrain the irradiated water with ozone so as to ozonate the water and in doing so sanitise the irradiated water;
- a sanitised water tank (134) to receive and store the sanitised water;
- a controlled pump (142) to pump the sanitised water from the sanitised water tank (134), through an outlet filter (146) so as to flow along a potable water supply (154) to a dispensing outlet
**characterised in that**, the water sanitisation assembly (100) further comprises:
- a return conduit (156), which is arranged intermediate the potable water supply (154) and the irradiator (118), to pass sanitised water which is to be refreshed through the irradiator (118) and the aerator (130);
- a valve (158) which is located along the return conduit (156) so as to open and close the return conduit (156) respectively, and, which is configured to be opened upon command by the controller (164) to allow the sanitised water which is to be refreshed to pass through the return conduit (156), thus allowing a periodic refresh of the sanitised water in the sanitised water tank (134); and,
- a non-return valve (162) located immediately before the irradiator (118).

7. A water sanitisation assembly (100) as claimed in claim 6, wherein, the water sanitisation assembly (100) further comprises a pressure sensor so as to monitor pressure in the potable water supply (154) and detect a drop in the pressure in the potable water supply (154) which would indicate a demand for the sanitised water by the user; and, means (150) for activating the pump (142) upon detection of such a drop in the pressure by the pressure sensor.

8. A water sanitisation assembly (100) for sanitising treated water (102) of an unsatisfactory quality so as to produce sanitised water which is potable and of a satisfactory quality, the water sanitisation assembly (100) comprising:
- an inlet to receive treated water from a water supply;
- an inlet particle filter (110) to filter the received water so as to partially sanitise the treated water;
- a non-return valve (116), located before an irradiator (118);
- the irradiator (118) to irradiate the filtered water so as to further sanitise the filtered water, whereby, the irradiator is provided by an ultra violet reactor comprising an ultraviolet lamp (121);
- a controller (164) which will only allow the filtered water to be passed into the irradiator (118) after the ultraviolet lamp (121) has become operational such as to act as a germicidal barrier and create ozone for an aerator (130);
- the aerator (130) to entrain the irradiated water with ozone so as to ozonate the water and in doing so sanitise the irradiated water;
- a sanitised water tank (134) to receive and store the sanitised water;
- a controlled pump (142) to pump the sanitised water from the sanitised water tank (134), through an outlet filter (146) so as to flow along a potable water supply (154) to a dispensing outlet
**characterised in that**, the water sanitisation assembly (100) further comprises:
- a return conduit (156), which is arranged intermediate the potable water supply (154) and the aerator (130), to pass sanitised water which is to be refreshed through the aerator (130);
- a valve (158) which is located along the return conduit (156) so as to open and close the return conduit (156) respectively, and, which is configured to be opened upon command by the controller (164) that also ensures the irradiator (118)is operational and to allow the sanitised water which is to be refreshed to pass through the return conduit (156), thus allowing a periodic refresh of the sanitised water in the sanitised water tank (134); and,
- a non-return valve (202) located immediately before the aerator (130).

9. A water sanitisation assembly (100) as claimed in claim 8, wherein, the water sanitisation assembly (100) further comprises a non-return valve (304) located after the irradiator (118), when the return conduit (156) is arranged intermediate the potable water supply (154) and the aerator (130).

10. A water sanitisation assembly (100) as claimed in claim 8 or 9, wherein the water sanitisation assembly (100) further comprises a pressure sensor so as to monitor pressure in the potable water supply (154) and detect a drop in the pressure in the potable water supply (154) which would indicate a demand for the sanitised water by the user; and, means (150) for activating the pump (142) upon detection of such a drop in the pressure by the pressure sensor.

## Patentansprüche

1. Verfahren zum Entkeimen behandelten Wassers (102) von unzureichender Qualität zur Herstellung von entkeimtem Wasser von zufriedenstellender Qualität, wobei das Verfahren die folgenden Schritte umfasst:
- Empfangen behandelten Wassers von einer Wasserversorgung (102) an einem Einlass (104) zu einer Wasserentkeimungsbaugruppe (100);
- Filtern des empfangenen behandelten Wassers (102) in einem Einlasspartikelfilter (110) zum teilweisen Entkeimen des behandelten Wassers;
- Leiten des gefilterten Wassers durch ein Rückschlagventil (116), das sich vor einer Bestrahlungsvorrichtung (118) befindet, wobei die Bestrahlungsvorrichtung durch einen Ultraviolettreaktor bereitgestellt wird, der eine Ultraviolettlampe (121) umfasst, und wobei das gefilterte Wasser erst in die Bestrahlungsvorrichtung (118) geleitet wird, nachdem die ultraviolette Lampe (121) in Betrieb genommen wurde, um als keimtötende Barriere zu wirken und Ozon für einen Belüfter (130) zu schaffen;
- Bestrahlen des gefilterten Wassers in der Bestrahlungsvorrichtung (118), um das gefilterte Wasser weiter zu entkeimen;
- Ozonisieren des bestrahlten Wassers in dem Belüfter (130), um das bestrahlte Wasser zu entkeimen;
- Speichern des entkeimten Wassers in einem entkeimten Wasserbehälter (134); und,
- bei Anfordern eines Benutzers, Aktivieren einer gesteuerten Pumpe (142), um das entkeimte Wasser aus dem entkeimten Wasserbehälter (134) und durch einen Auslassfilter (146) zu pumpen, damit es entlang einer Trinkwasserversorgung (154) strömt und an einem Abgabeauslass ankommt;
**dadurch gekennzeichnet, dass** das Verfahren ferner den Schritt eines periodischen Erneuerungszyklus umfasst, der Folgendes umfasst:
- Verwenden einer Rücklaufleitung (156), die zwischen der Trinkwasserversorgung (154) und der Bestrahlungsvorrichtung (118) angeordnet ist, und die ein Ventil (158) und ein Rückschlagventil (162) aufweist,
- auf Befehl einer zentralen Steuerung (164), Sicherstellen, dass die Bestrahlungsvorrichtung (118) betriebsbereit ist, und Öffnen des Ventils (158), um zu ermöglichen, dass das entkeimte Wasser erneuert wird, indem es durch die Rücklaufleitung (156) strömt, sodass das zu erneuernde entkeimte Wasser durch die Bestrahlungsvorrichtung (118) und den Belüfter (130) geleitet wird, was eine periodische Erneuerung des entkeimten Wassers in dem entkeimten Wasserbehälter (134) ermöglicht.

2. Verfahren zum Entkeimen behandelten Wassers nach Anspruch 1, wobei der Schritt des Erneuerns unzureichend entkeimten Wassers, das in dem entkeimten Wasserbehälter (134) gespeichert wird, ferner die folgenden Schritte umfasst:
- Öffnen des Ventils (158) an der Rücklaufleitung (156), wo das Ventil (158) zwischen der Trinkwasserversorgung (154) und der Bestrahlungsvorrichtung (118) angeordnet ist;
- Pumpen des unzureichend entkeimten Wassers aus dem entkeimten Wasserbehälter (134) und durch die Rücklaufleitung (156) in die Bestrahlungsvorrichtung (118);
- Bestrahlen des unzureichend entkeimten Wassers in der Bestrahlungsvorrichtung (118), um das unzureichend entkeimte Wasser teilweise zu erneuern;
- Ozonisieren des bestrahlten Wassers in dem Belüfter (130), um das bestrahlte Wasser zu erneuern;
- Speichern des erneuerten Wassers in dem entkeimten Wasserbehälter (134).

3. Verfahren zum Entkeimen behandelten Wassers (102) von unzureichender Qualität zur Herstellung von entkeimtem Wasser von zufriedenstellender Qualität; wobei das Verfahren die folgenden Schritte umfasst:
- Empfangen behandelten Wassers von einer Wasserversorgung (102) an einem Einlass (104) zu einer Wasserentkeimungsbaugruppe (100);
- Filtern des empfangenen behandelten Wassers (102) in einem Einlasspartikelfilter (110) zum teilweisen Entkeimen des behandelten Wassers;
- Leiten des gefilterten Wassers durch ein Rückschlagventil (116), das sich vor einer Bestrahlungsvorrichtung (118) befindet, wobei die Bestrahlungsvorrichtung durch einen Ultraviolettreaktor bereitgestellt wird, der eine Ultraviolettlampe (121) umfasst, und wobei das gefilterte Wasser erst in die Bestrahlungsvorrichtung (118) geleitet wird, nachdem die ultraviolette Lampe (121) in Betrieb genommen wurde, um als keimtötende Barriere zu wirken und Ozon für einen Belüfter (130) zu schaffen;
- Bestrahlen des gefilterten Wassers in der Bestrahlungsvorrichtung (118), um das gefilterte Wasser weiter zu entkeimen;
- Ozonisieren des bestrahlten Wassers in dem Belüfter (130), um das bestrahlte Wasser zu entkeimen;
- Speichern des entkeimten Wassers in einem entkeimten Wasserbehälter (134); und,
- bei Anfordern eines Benutzers, Aktivieren einer gesteuerten Pumpe (142), um das entkeimte Wasser aus dem entkeimten Wasserbehälter (134) und durch einen Auslassfilter (146) zu pumpen, damit es entlang einer Trinkwasserversorgung (154) strömt und an einem Abgabeauslass ankommt;
**dadurch gekennzeichnet, dass** das Verfahren ferner den Schritt eines periodischen Erneuerungszyklus umfasst, der Folgendes umfasst:
- Verwenden einer Rücklaufleitung (156), die zwischen der Trinkwasserversorgung (154) und dem Belüfter (130) angeordnet ist, und die ein Ventil (158) und ein Rückschlagventil (202) aufweist,
- auf Befehl einer zentralen Steuerung (164), Sicherstellen, dass die Bestrahlungsvorrichtung (118) betriebsbereit ist, und
Öffnen des Ventils (158), um zu ermöglichen, dass das entkeimte Wasser erneuert wird, indem es durch die Rücklaufleitung (156) strömt, sodass das zu erneuernde entkeimte Wasser durch den Belüfter (130) geleitet wird, was eine periodische Erneuerung des entkeimten Wassers in dem entkeimten Wasserbehälter (134) ermöglicht.

4. Verfahren zum Entkeimen behandelten Wassers nach Anspruch 3, wobei das Verfahren ferner das Leiten des bestrahlten Wassers durch ein Rückschlagventil (304) umfasst, das sich nach der Bestrahlungsvorrichtung (118) befindet, wenn die Rücklaufleitung (156) zwischen der Trinkwasserversorgung (154) und dem Belüfter (130) angeordnet ist.

5. Verfahren zum Entkeimen behandelten Wassers nach Anspruch 3 oder 4, wobei der Schritt des Erneuerns unzureichend entkeimten Wassers, das in dem entkeimten Wasserbehälter (134) gespeichert ist, ferner die folgenden Schritte umfasst:
- Öffnen des Ventils (158) an der Rücklaufleitung (156), wobei das Ventil (158) zwischen der Trinkwasserversorgung (154) und dem Belüfter (130) angeordnet ist;
- Pumpen des unzureichend entkeimten Wassers aus dem entkeimten Wasserbehälter (134) und durch die Rücklaufleitung (156) in den Belüfter (130);
- Ozonisieren des unzureichend entkeimten Wassers in dem Belüfter (130), um das unzureichend entkeimte Wasser zu erneuern; und
- Speichern des erneuerten Wassers in dem entkeimten Wasserbehälter (134).

6. Wasserentkeimungsbaugruppe (100) zum Entkeimen behandelten Wassers (102) von unzureichender Qualität zur Herstellung von entkeimtem Wasser, das trinkbar und von zufriedenstellender Qualität ist, wobei die Wasserentkeimungsbaugruppe (100) Folgendes umfasst:
- einen Einlass zum Empfangen behandelten Wassers von einer Wasserversorgung;
- einen Einlasspartikelfilter (110) zum Filtern des empfangenen Wassers, um das behandelte Wasser teilweise zu entkeimen;
- ein Rückschlagventil (116), das sich vor einer Bestrahlungsvorrichtung (118) befindet,
- die Bestrahlungsvorrichtung (118) zum Bestrahlen des gefilterten Wassers, um das gefilterte Wasser weiter zu entkeimen, wobei die Bestrahlungsvorrichtung durch einen Ultraviolettreaktor bereitgestellt wird, der eine Ultraviolettlampe (121) umfasst;
- eine Steuerung (164), die erst zulässt, dass das gefilterte Wasser in die Bestrahlungsvorrichtung (118) geleitet wird, nachdem die ultraviolette Lampe (121) in Betrieb genommen wurde, um als keimtötende Barriere zu wirken und Ozon für einen Belüfter (130) zu schaffen;
- den Belüfter (130), um das bestrahlte Wasser mit Ozon mitzuziehen, um das Wasser zu ozonisieren und dadurch das bestrahlte Wasser zu entkeimen;
- einen entkeimten Wasserbehälter (134) zum Aufnehmen und Speichern des entkeimten Wassers;
- eine gesteuerte Pumpe (142), um das entkeimte Wasser aus dem entkeimten Wasserbehälter (134) durch einen Auslassfilter (146) zu pumpen, damit es entlang einer Trinkwasserversorgung (154) zu einem Abgabeauslass strömt;
**dadurch gekennzeichnet, dass** die Wasserentkeimungsbaugruppe (100) ferner Folgendes umfasst:
- eine Rücklaufleitung (156), die zwischen der Trinkwasserversorgung (154) und der Bestrahlungsvorrichtung (118) angeordnet ist, um zu erneuerndes entkeimtes Wasser durch die Bestrahlungsvorrichtung (118) und den Belüfter (130) zu leiten;
- ein Ventil (158), das entlang der Rücklaufleitung (156) angeordnet ist, um die Rücklaufleitung (156) jeweils zu öffnen und zu schließen und das dazu konfiguriert ist, auf Befehl von der Steuerung (164) geöffnet zu werden, um zu ermöglichen, dass das zu erneuernde entkeimte Wasser durch die Rücklaufleitung (156) geleitet wird, wodurch eine periodische Erneuerung des entkeimten Wassers in dem entkeimten Wasserbehälter (134) ermöglicht wird; und,
- ein Rückschlagventil (162), das sich unmittelbar vor der Bestrahlungsvorrichtung (118) befindet.

7. Wasserentkeimungsbaugruppe (100) nach Anspruch 6, wobei die Wasserentkeimungsbaugruppe (100) ferner Folgendes umfasst:
einen Drucksensor zum Überwachen des Drucks in der Trinkwasserversorgung (154) und Erkennen einen Druckabfalls in der Trinkwasserversorgung (154), der ein Anfordern des entkeimten Wassers durch den Benutzer anzeigen würde; und
Mittel (150) zum Aktivieren der Pumpe (142) bei Erkennen eines derartigen Druckabfalls durch den Drucksensor.

8. Wasserentkeimungsbaugruppe (100) zum Entkeimen behandelten Wassers (102) von unzureichender Qualität zur Herstellung von entkeimtem Wasser, das trinkbar und von zufriedenstellender Qualität ist, wobei die Wasserentkeimungsbaugruppe (100) Folgendes umfasst:
- einen Einlass zum Empfangen behandelten Wassers von einer Wasserversorgung;
- einen Einlasspartikelfilter (110) zum Filtern des empfangenen Wassers, um das behandelte Wasser teilweise zu entkeimen;
- ein Rückschlagventil (116), das sich vor einer Bestrahlungsvorrichtung (118) befindet;
- eine Bestrahlungsvorrichtung (118) zum Bestrahlen des gefilterten Wassers, um das gefilterte Wasser weiter zu entkeimen, wobei die Bestrahlungsvorrichtung durch einen Ultraviolettreaktor bereitgestellt wird, der eine Ultraviolettlampe (121) umfasst;
- eine Steuerung (164), die erst zulässt, dass das gefilterte Wasser in die Bestrahlungsvorrichtung (118) geleitet wird, nachdem die ultraviolette Lampe (121) in Betrieb genommen wurde, um als keimtötende Barriere zu wirken und Ozon für einen Belüfter (130) zu schaffen;
- den Belüfter (130), um das bestrahlte Wasser mit Ozon mitzuziehen, um das Wasser zu ozonisieren und dadurch das bestrahlte Wasser zu entkeimen;
- einen entkeimten Wasserbehälter (134) zum Aufnehmen und Speichern des entkeimten Wassers;
- eine gesteuerte Pumpe (142), um das entkeimte Wasser aus dem entkeimten Wasserbehälter (134) durch einen Auslassfilter (146) zu pumpen, damit es entlang einer Trinkwasserversorgung (154) zu einem Abgabeauslass strömt;
**dadurch gekennzeichnet, dass** die Wasserentkeimungsbaugruppe (100) ferner Folgendes umfasst:
- eine Rücklaufleitung (156), die zwischen der Trinkwasserversorgung (154) und dem Belüfter (130) angeordnet ist, um zu erneuerndes entkeimtes Wasser durch den Belüfter (130) zu leiten;
- ein Ventil (158), das entlang der Rücklaufleitung (156) angeordnet ist, um die Rücklaufleitung (156) jeweils zu öffnen und zu schließen und das dazu konfiguriert ist, auf Befehl von der Steuerung (164) geöffnet zu werden, die auch sicherstellt, dass die Bestrahlungsvorrichtung (118) betriebsbereit ist, und um zu ermöglichen, dass das zu erneuernde entkeimte Wasser durch die Rücklaufleitung (156) geleitet wird, wodurch eine periodische Erneuerung des entkeimten Wassers in dem entkeimten Wasserbehälter (134) ermöglicht wird; und
- ein Rückschlagventil (202), das sich unmittelbar vor dem Belüfter (130) befindet.

9. Wasserentkeimungsbaugruppe (100) nach Anspruch 8, wobei die Wasserentkeimungsbaugruppe (100) ferner ein Rückschlagventil (304) umfasst, das sich nach der Bestrahlungsvorrichtung (118) befindet, wenn die Rücklaufleitung (156) zwischen der Trinkwasserversorgung (154) und dem Belüfter (130) angeordnet ist.

10. Wasserentkeimungsbaugruppe (100) nach Anspruch 8 oder 9, wobei die Wasserentkeimungsbaugruppe (100) ferner Folgendes umfasst: einen Drucksensor zum Überwachen des Drucks in der Trinkwasserversorgung (154) und Erkennen einen Druckabfalls in der Trinkwasserversorgung (154), der ein Anfordern des entkeimten Wassers durch den Benutzer anzeigen würde; und Mittel (150) zum Aktivieren der Pumpe (142) bei Erkennen eines derartigen Druckabfalls durch den Drucksensor.

## Revendications

1. Procédé d'aseptisation d'eau traitée (102) d'une qualité insatisfaisante de manière à produire de l'eau aseptisée qui soit de qualité satisfaisante ; le procédé comprenant les étapes de :
- réception d'eau traitée d'une alimentation d'eau (102) au niveau d'une entrée (104) à un ensemble d'aseptisation d'eau (100) ;
- filtrage de l'eau traitée reçue (102) dans un filtre à particules d'entrée (110) pour aseptiser en partie l'eau traitée ;
- circulation de l'eau filtrée à travers un clapet de non-retour (116) situé avant un irradiateur (118), moyennant quoi l'irradiateur est fourni par un réacteur ultraviolet comprenant une lampe ultraviolette (121), et, moyennant quoi l'eau filtrée circule uniquement dans l'irradiateur (118) après que la lampe ultraviolette (121) est entrée en fonctionnement de manière à agir comme une barrière germicide et créer de l'ozone pour un aérateur (130) ;
- irradiation de l'eau filtrée dans l'irradiateur (118) pour aseptiser également l'eau filtrée ;
- ozonisation de l'eau irradiée dans l'aérateur (130) pour aseptiser l'eau irradiée ;
- stockage de l'eau aseptisée dans une cuve d'eau aseptisée (134) ; et,
- sur demande d'un utilisateur, activation d'une pompe régulée (142) pour pomper l'eau aseptisée hors de la cuve d'eau aseptisée (134) et à travers un filtre de sortie (146) de manière à ce qu'elle circule le long d'une alimentation en eau potable (154) et arrive à une sortie de distribution ; **caractérisé en ce que** le procédé comprend en outre l'étape d'un cycle de régénération périodique comprenant :
- l'utilisation d'une conduite de retour (156) qui est agencée entre l'alimentation en eau potable (154) et l'irradiateur (118), et qui comporte un clapet (158) et un clapet de non-retour (162),
- sur commande d'un dispositif de contrôle central (164), le fait de s'assurer que l'irradiateur (118) fonctionne et ouvre le clapet (158) pour permettre à l'eau aseptisée d'être régénérée en circulant à travers la conduite de retour (156) de sorte que l'eau aseptisée à régénérer circule à travers l'irradiateur (118) et l'aérateur (130), en permettant ainsi une régénération périodique de l'eau aseptisée dans la cuve d'eau aseptisée (134).

2. Procédé d'aseptisation d'eau traitée selon la revendication 1, dans lequel l'étape de régénération d'eau aseptisée de manière insatisfaisante qui est stockée dans la cuve d'eau aseptisée (134) comprend en outre les étapes de :
- ouverture du clapet (158) sur la conduite de retour (156), où le clapet (158) est agencé entre l'alimentation en eau potable (154) et l'irradiateur (118) ;
- pompage de l'eau aseptisée de manière insatisfaisante hors de la cuve d'eau aseptisée (134) et à travers la conduite de retour (156) dans l'irradiateur (118) ;
- irradiation de l'eau aseptisée de manière insatisfaisante dans l'irradiateur (118) pour régénérer en partie l'eau aseptisée de manière insatisfaisante;
- ozonisation de l'eau irradiée dans l'aérateur (130) pour régénérer l'eau irradiée ; et,
- stockage de l'eau régénérée dans la cuve d'eau aseptisée (134).

3. Procédé d'aseptisation d'eau traitée (102) d'une qualité insatisfaisante de manière à produire de l'eau aseptisée de qualité satisfaisante ; le procédé comprenant les étapes de :
- réception d'eau traitée d'une alimentation d'eau (102) au niveau d'une entrée (104) à un ensemble d'aseptisation d'eau (100) ;
- filtrage de l'eau traitée reçue (102) dans un filtre à particules d'entrée (110) pour aseptiser en partie l'eau traitée ;
- circulation de l'eau filtrée à travers un clapet de non-retour (116) situé avant un irradiateur (118), moyennant quoi l'irradiateur est fourni par un réacteur ultraviolet comprenant une lampe ultraviolette (121), et, moyennant quoi l'eau filtrée circule uniquement dans l'irradiateur (118) après que la lampe ultraviolette (121) est entrée en fonctionnement de manière à agir comme une barrière germicide et créer de l'ozone pour un aérateur (130) ;
- irradiation de l'eau filtrée dans l'irradiateur (118) pour aseptiser également l'eau filtrée ;
- ozonisation de l'eau irradiée dans l'aérateur (130) pour aseptiser l'eau irradiée ;
- stockage de l'eau aseptisée dans une cuve d'eau aseptisée (134) ; et,
- sur demande d'un utilisateur, activation d'une pompe régulée (142) pour pomper l'eau aseptisée hors de la cuve d'eau aseptisée (134) et à travers un filtre de sortie (146) de manière à ce qu'elle circule le long d'une alimentation en eau potable (154) et arrive à une sortie de distribution ;
**caractérisé en ce que** le procédé comprend en outre l'étape d'un cycle de régénération périodique comprenant :
- l'utilisation d'une conduite de retour (156) qui est agencée entre l'alimentation en eau potable (154) et l'aérateur (130), et qui comporte un clapet (158) et un clapet de non-retour (202),
- sur commande d'un dispositif de contrôle central (164), le fait de s'assurer que l'irradiateur (118) fonctionne et ouvre le clapet (158) pour permettre à l'eau aseptisée d'être régénérée en circulant à travers la conduite de retour (156) de sorte que l'eau aseptisée à régénérer circule à travers l'aérateur (130), en permettant ainsi une régénération périodique de l'eau aseptisée dans la cuve d'eau aseptisée (134).

4. Procédé d'aseptisation d'eau traitée selon la revendication 3, dans lequel le procédé comprend en outre la circulation de l'eau irradiée à travers un clapet de non-retour (304) situé après l'irradiateur (118) lorsque la conduite de retour (156) est agencée entre l'alimentation en eau potable (154) et l'aérateur (130).

5. Procédé d'aseptisation d'eau traitée selon la revendication 3 ou 4, dans lequel l'étape de régénération d'eau aseptisée de manière insatisfaisante qui est stockée dans la cuve d'eau aseptisée (134) comprend en outre les étapes de :
- ouverture du clapet (158) sur la conduite de retour (156), où le clapet (158) est agencé entre l'alimentation en eau potable (154) et l'aérateur (130) ;
- pompage de l'eau aseptisée de manière insatisfaisante hors de la cuve d'eau aseptisée (134) et à travers la conduite de retour (156) dans l'aérateur (130) ;
- ozonisation de l'eau aseptisée de manière insatisfaisante dans l'aérateur (130) pour régénérer l'eau aseptisée de manière insatisfaisante ; et,
- stockage de l'eau régénérée dans la cuve d'eau aseptisée (134).

6. Ensemble d'aseptisation d'eau (100) pour aseptiser de l'eau traitée (102) d'une qualité insatisfaisante de manière à produire de l'eau aseptisée qui est potable et d'une qualité satisfaisante, l'ensemble d'aseptisation d'eau (100) comprenant :
- une entrée pour recevoir l'eau traitée provenant d'une alimentation d'eau ;
- un filtre à particules d'entrée (110) pour filtrer l'eau reçue de manière à aseptiser en partie l'eau traitée ;
- un clapet de non-retour (116), situé avant un irradiateur (118) ;
- l'irradiateur (118) pour irradier l'eau filtrée de manière à aseptiser également l'eau filtrée, moyennant quoi l'irradiateur est fourni par un réacteur ultraviolet comprenant une lampe ultraviolette (121) ;
- un dispositif de contrôle (164) qui permettra uniquement à l'eau filtrée de circuler dans l'irradiateur (118) après que la lampe ultraviolette (121) est entrée en fonctionnement de manière à agir comme une barrière germicide et créer de l'ozone pour un aérateur (130) ;
- l'aérateur (130) pour entraîner l'eau irradiée avec l'ozone de manière à ozoniser l'eau et, ce faisant, à aseptiser l'eau irradiée ;
- une cuve d'eau aseptisée (134) pour recevoir et stocker l'eau aseptisée ;
- une pompe régulée (142) pour pomper l'eau aseptisée de la cuve d'eau aseptisée (134), à travers un filtre de sortie (146) de manière à ce qu'elle circule le long d'une alimentation en eau potable (154), à une sortie de distribution
**caractérisé en ce que** l'ensemble d'aseptisation d'eau (100) comprend en outre :
- une conduite de retour (156), qui est agencée entre l'alimentation en eau potable (154) et l'irradiateur (118), pour faire circuler l'eau aseptisée qui doit être régénérée à travers l'irradiateur (118) et l'aérateur (130) ;
- un clapet (158) qui est situé le long de la conduite de retour (156) de manière à ouvrir et fermer la conduite de retour (156) respectivement, et qui est conçu pour être ouvert sur commande du dispositif de contrôle (164) pour permettre à l'eau aseptisée qui doit être régénérée de circuler à travers la conduite de retour (156), en permettant ainsi une régénération périodique de l'eau aseptisée dans la cuve d'eau aseptisée (134) ; et,
- un clapet de non-retour (162) situé juste avant l'irradiateur (118).

7. Ensemble d'aseptisation d'eau (100) selon la revendication 6, dans lequel l'ensemble d'aseptisation d'eau (100) comprend en outre un capteur de pression de manière à surveiller la pression dans l'alimentation en eau potable (154) et détecter une baisse de pression dans l'alimentation en eau potable (154) qui indiquerait une demande d'eau aseptisée de la part de l'usager ; et un moyen (150) d'activation de la pompe (142) lors de la détection d'une telle baisse de pression par le capteur de pression.

8. Ensemble d'aseptisation d'eau (100) pour aseptiser l'eau traitée (102) d'une qualité insatisfaisante de manière à produire de l'eau aseptisée qui est potable et d'une qualité satisfaisante, l'ensemble d'aseptisation d'eau (100) comprenant :
- une entrée pour recevoir l'eau traitée provenant d'une alimentation d'eau ;
- un filtre à particules d'entrée (110) pour filtrer l'eau reçue de manière à aseptiser en partie l'eau traitée ;
- un clapet de non-retour (116), situé avant un irradiateur (118) ;
- l'irradiateur (118) pour irradier l'eau filtrée de manière à aseptiser également l'eau filtrée, moyennant quoi l'irradiateur est fourni par un réacteur ultraviolet comprenant une lampe ultraviolette (121) ;
- un dispositif de contrôle (164) qui permettra uniquement à l'eau filtrée de circuler dans l'irradiateur (118) après que la lampe ultraviolette (121) est entrée en fonctionnement de manière à agir comme une barrière germicide et créer de l'ozone pour un aérateur (130) ;
- l'aérateur (130) pour entraîner l'eau irradiée avec l'ozone de manière à ozoniser l'eau et, ce faisant, à aseptiser l'eau irradiée ;
- une cuve d'eau aseptisée (134) pour recevoir et stocker l'eau aseptisée ;
- une pompe régulée (142) pour pomper l'eau aseptisée de la cuve d'eau aseptisée (134), à travers un filtre de sortie (146) de manière à ce qu'elle circule le long d'une alimentation en eau potable (154), à une sortie de distribution
**caractérisé en ce que** l'ensemble d'aseptisation d'eau (100) comprend en outre :
- une conduite de retour (156), qui est agencée entre l'alimentation en eau potable (154) et l'aérateur (130), pour faire circuler l'eau aseptisée qui doit être régénérée à travers l'aérateur (130) ;
- un clapet (158) qui est situé le long de la conduite de retour (156) de manière à ouvrir et fermer la conduite de retour (156) respectivement, et qui est conçu pour être ouvert sur commande du dispositif de contrôle (164) qui garantit également que l'irradiateur (118) est en fonctionnement, et à permettre à l'eau aseptisée qui doit être régénérée de circuler à travers la conduite de retour (156), en permettant ainsi une régénération périodique de l'eau aseptisée dans la cuve d'eau aseptisée (134) ; et,
- un clapet de non-retour (202) situé juste avant l'aérateur (130).

9. Ensemble d'aseptisation d'eau (100) selon la revendication 8, dans lequel l'ensemble d'aseptisation d'eau (100) comprend en outre un clapet de non-retour (304) situé après l'irradiateur (118), lorsque la conduite de retour (156) est agencée entre l'alimentation en eau potable (154) et l'aérateur (130).

10. Ensemble d'aseptisation d'eau (100) selon la revendication 8 ou 9, dans lequel l'ensemble d'aseptisation d'eau (100) comprend en outre un capteur de pression de manière à surveiller la pression dans l'alimentation en eau potable (154) et détecter une baisse de pression dans l'alimentation en eau potable (154) qui indiquerait une demande d'eau aseptisée de la part de l'usager ; et un moyen (150) d'activation de la pompe (142) lors de la détection d'une telle baisse de pression par le capteur de pression.
